# EUROPEAN PATENT SPECIFICATION

(11) **EP 1 110 768 B1**
(45) Date of publication and mention of the grant of the patent: **13.08.2003**
(21) Application number: 00127471.1
(22) Date of filing: 14.12.2000
(51) Int. Cl.: B60G 21/073, B60G 17/04, F16F 9/06, F16F 9/32

(54) **Vehicle suspension device**
Fahrzeugaufhängungsvorrichtung
Dispositif de suspension de véhicule

(30) Priority: 24.12.1999 JP 36610799
(43) Date of publication of application: 27.06.2001
(73) Proprietor: YAMAHA HATSUDOKI KABUSHIKI KAISHA, Iwata-shi Shizuoka-ken (JP)
(72) Inventor: Sawai, Seiji, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 695 658
- DE-A- 4 029 490
- DE-B- 1 209 443
- GB-A- 1 341 123
- US-A- 5 772 224

## Description

This invention relates to a vehicle suspension device comprising a pair of hydraulic dampers and a pressure regulator having oil chambers connected to the hydraulic dampers.

As an example of the above type of vehicle suspension system, one is proposed as shown in FIG. 5 (Refer to the publication of a Japanese laid-open patent application No. Hei-6-72127 which shows the features of the preamble of claim 1).

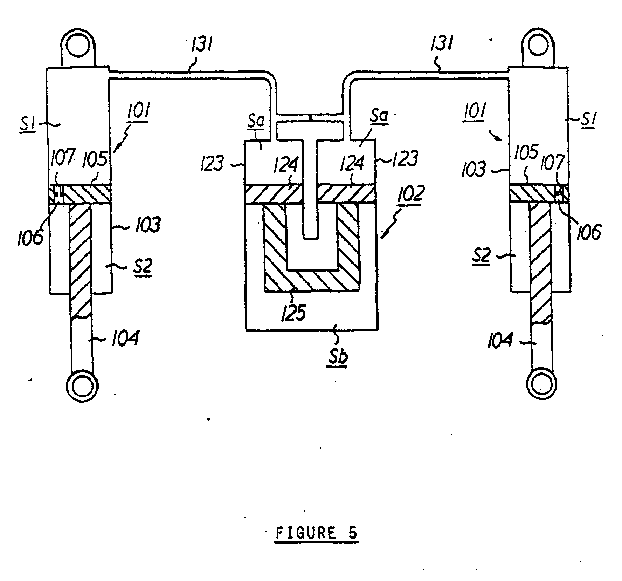

FIG. 5 shows a schematic cross section of an overall constitution of a conventional vehicle suspension system comprising a pair of right and left hydraulic dampers 101 and a pressure regulator 102.

Here, each hydraulic damper 101 comprises; a cylinder 103 into which is inserted a freely slidable piston 105 connected to the top end of a piston rod 104 inserted from under into the cylinder 103. The interior of the cylinder 103 is divided with the piston 105 into an upper oil chamber S1 and a lower oil chamber S2, both filled with oil. The piston 105 is provided with a communication passage 106 which in turn is provided with a throttle 107.

Next, a pressure regulator 102 comprises a pair of mutually communicating cylinders 123, each with a slidable free piston 124 inserted therein, with the free pistons 124 interconnected through a connecting member 125. The inside of the cylinders 123 is defined with the free pistons 124 into a pair of oil chambers Sa and a gas chamber Sb. Each of the oil chambers Sa is filled with oil and is connected through a hydraulic route 131 to the upper oil chamber S1 of each hydraulic damper 101. The gas chamber Sb is filled with an inert gas.

The cylinder 103 of each hydraulic damper 101 is mounted on the vehicle body side, and the piston rod 104 is mounted on the wheel side. According to road surface irregularities, the cylinder 103 and the piston rod 104 of each hydraulic damper 101 extends or contracts, and the piston 105 slides inside the cylinder 103. As the piston 105 slides, oil passes through the throttle 107 provided in the communication passage 106 of the piston 105 to produce a damping force which attenuates oscillation of a vehicle body when it runs over an irregular road surface. In this case, while the amount of oil in the cylinder 103 of each hydraulic damper 101 increases or decreases by the volume corresponding to the movement of the piston rod 104 into or out of the cylinder 103, the change in the oil volume is balanced by the compression or expansion of the gas in the gas chamber Sb caused by the sliding movement of the free piston 124 of the pressure regulator 102.

However, in the case of for example the strut type suspension system in which the diameter of the piston rod of each hydraulic damper is great, the increase and decrease in the amount of oil in the cylinder caused by the movement of the piston rod into and out of the cylinder is great. This results in the increase in the volumes of the oil chambers of the pressure regulator. This in turn results not only in the increase in size and cost of the pressure regulator but also in the difficulty of mounting the pressure regulator on the vehicle.

It is an objective of the present invention to provide a vehicle suspension system which is compact in size and allows a high suspension performance.

According to the present invention this object is solved by a vehicle suspension device comprising: first and second hydraulic dampers, each having a cylinder and a first piston defining a first and a second hydraulic chamber within said cylinder, said cylinder and said first piston are relatively moveable to each other; and a pressure regulator having first and second hydraulic chambers respectively connected to the first and second hydraulic dampers, wherein a sub-piston is provided in each of the first and second hydraulic dampers, said sub-piston is inserted in a third hydraulic chamber and relatively moveable within said third hydraulic chamber in accordance with the relative movement between said cylinder and said first piston, and wherein said third hydraulic chambers of said first and second hydraulic dampers are connected to the first and second oil chambers of the pressure regulator, respectively.

It is an advantage of the invention to provide a vehicle suspension system that makes it possible to reduce the size and resultant cost of the pressure regulator and increase the degree of freedom in mounting the pressure regulator on the vehicle even if the diameter of the piston rod of each hydraulic damper is great.

According to a preferred embodiment said first piston is connected to one end of a piston rod, said piston rod of each hydraulic damper is made in a hollow shape and a hollow section is formed in the interior of the hollow shape, and said sub-piston is connected with a sub-piston rod extending from the cylinder and inserted into the hollow section, wherein said sub-piston is inserted for free sliding into the hollow section of the piston rod to define an elongate hole-shaped oil chamber serving as said third hydraulic chamber.

An end of the sub-piston rod of each hydraulic damper is made to contact the cylinder.

Preferably, a gap is formed between the hollow section of the piston rod and the sub-piston rod of each hydraulic damper.

Preferably, each hydraulic damper is provided with volume absorption means.

Preferably, a hydraulic route including the first and a second hydraulic chamber of each hydraulic damper is constituted independent of a hydraulic route including the third hydraulic chamber of each hydraulic damper and the first and second hydraulic chamber of the pressure regulator respectively connected to the third hydraulic chamber.

Preferably, the first piston of each hydraulic damper is connected to a body side of a vehicle and the cylinder is connected to a wheel side of the vehicle.

Hereinafter, the present invention is illustrated and explained in detail by means of a preferred embodiment in conjunction with the accompanying drawings. In the drawings wherein:
- FIG. 1: shows an overall constitution in cross section of a vehicle suspension device of the embodiment;
- FIG. 2: shows a cross section of one of hydraulic dampers of the vehicle suspension device;
- FIG. 3: shows the section A-A in FIG. 2;
- FIG. 4: shows the portion B of FIG. 1 in a larger scale; and
- FIG. 5: shows a schematic cross section of an overall constitution of a conventional vehicle suspension system.

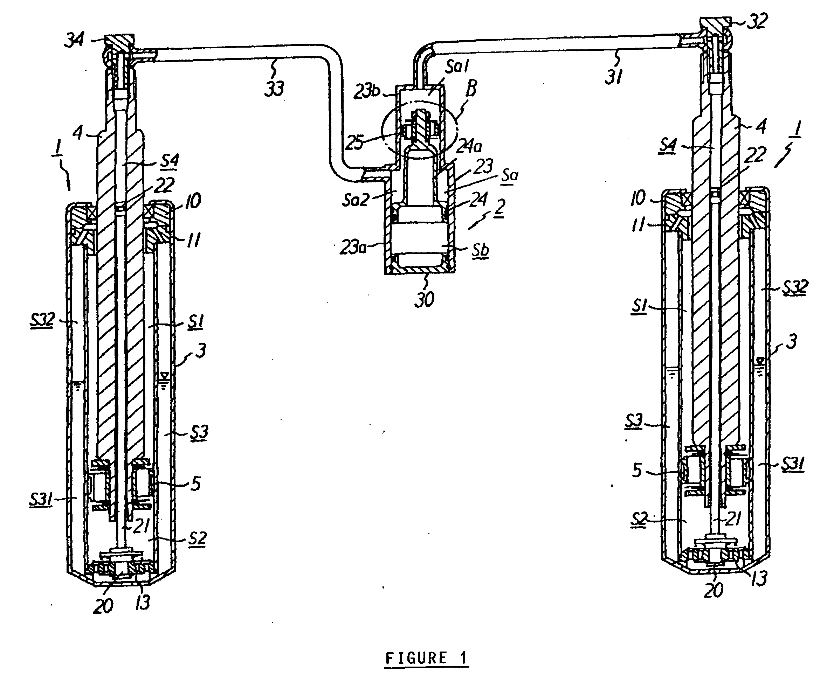

The vehicle suspension system or device related to this form of embodiment is used for suspending the right and left wheels of a four-wheeled vehicle such as an automobile, and comprises as shown in FIG. 1, paired right and left hydraulic dampers 1 and a pressure regulator 2 connected to the hydraulic dampers.

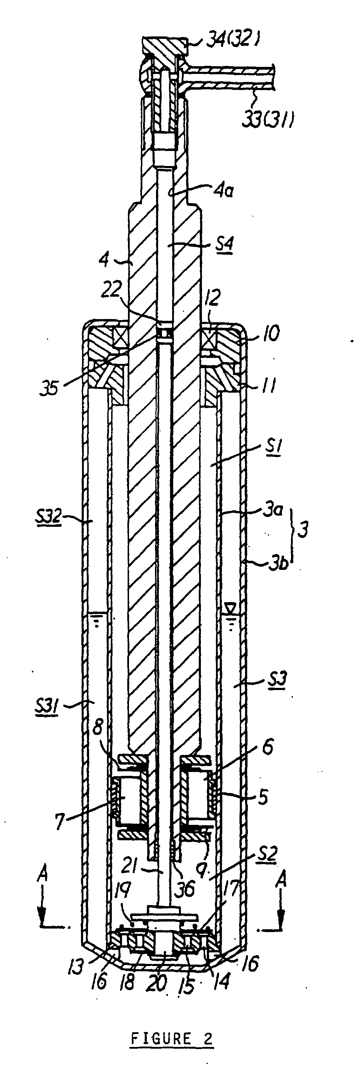

Here, details of the constitution of each hydraulic damper 1 will be described in reference to FIGs. 1 and 2.

Each hydraulic damper 1 comprises a cylinder 3 including an inner cylinder 3a and an outer cylinder 3b which are arranged coaxially. A piston rod 4 of a relatively great diameter is inserted into the inner cylinder 3a from above. At the lower end of the piston rod 4 is attached a piston 5 inserted for free sliding into the inner cylinder 3a. The piston 5 is provided with a plural number of oil holes 6 and 7 in staggered positions. Sheet-shaped valves 8 and 9 are disposed over and under the piston 5 to open and close the oil holes 6 and 7.

In the upper part of the cylinder 3 are fitted a cap 10 and a guide member 11, one under the other. Air-and-oil-tight seal is effected between the cylinder 3 and the piston rod 4 as an oil seal 12 held on the inside circumference of the cap 10 comes into sliding contact with the outside circumference of the piston rod 4.

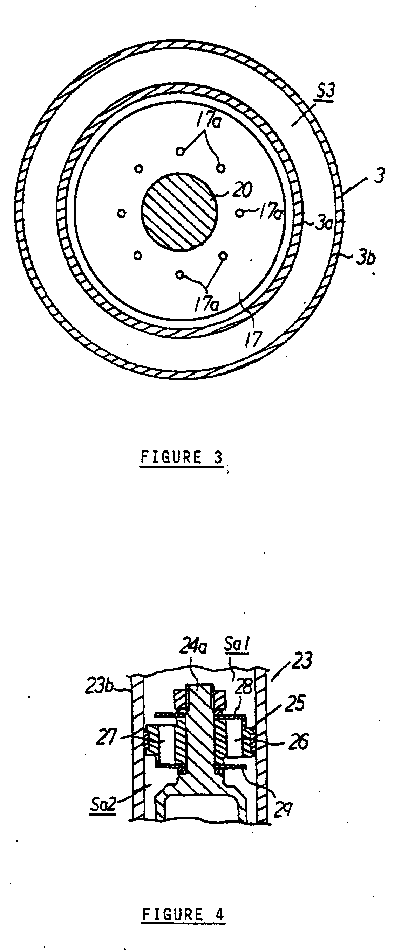

At the bottom of the inner cylinder 3a of the cylinder 3 is fitted a bottom plate 13 as a valve seat member and provided with a plural number of oil holes 14 and 15 positioned on inner and outer circles and also provided with a plural number of communication holes 16. Sheet-shaped valves 17 and 18 for opening and closing the oil holes 14, 15 are placed on the top and bottom surfaces of the bottom plate 13. One valve 17 is urged with a spring 19 in the closing direction, and the valve 17 is provided with a plural number of circular holes 17a which are open to the oil holes 15 as shown in FIG. 3. A stop member 20 is inserted and held in the center of the bottom plate 13.

The interior of the inner cylinder 3a of the cylinder 3 is divided with the piston 5 into an upper oil chamber S1 and a lower oil chamber S2, both filled with oil. A chamber S3 formed between the inner and outer cylinders 3a and 3b of the cylinder 3 is connected through the communication hole 16 to the lower oil chamber S2. The lower half S31 of the chamber S3 is an oil chamber and the upper half S32 is a gas chamber which serves as a volume balancing means. The oil chamber S31 is filled with oil and the gas chamber S32 is filled with an inert gas and sealed.

The piston rod 4 is formed in a hollow shape. A sub-piston rod 21 of a small diameter is inserted from under into the hollow section 4a formed in the axial center of the piston rod 4. The lower end of the sub-piston rod 21 is in contact with the top surface of the stop member 20 held with the bottom plate 13. The top end of the sub-piston rod 21 is integrally formed into a piston 22. The piston 22 is inserted for free sliding through an O-ring 35 into the hollow section 4a of the piston rod 4. In the hollow section 4a of the piston rod 4 is defined with the piston 22 an elongate hole-shaped oil chamber S4. The upper and lower parts of the sub-piston rod 21 are held for free sliding on the piston rod 4 by means of the piston 22 and a metallic collar 36. The outside diameter of the sub-piston rod 21 is slightly smaller than the inside diameter of the hollow section 4a of the piston rod 4, and therefore a small gap is present between the two. Though not shown, part of the metallic collar 36 is provided with cuts; otherwise the inside circumference of the piston rod 4 where the metallic collar 36 is to be press-fitted is provided with grooves, so that the gap present between the piston rod 4 and the sub-piston rod 21 is always in fluid communication with the lower oil chamber S2 through the cuts or grooves.

Next, the constitution of the pressure regulator 2 will be described in reference to FIGs. 1 and 4.

As shown in FIG. 1, the pressure regulator 2 comprises a cylinder 23 having a greater and a smaller diameter sections. In the greater diameter section 23a is inserted a free piston 24 for free sliding. A piston 25 is attached to the top end of the rod portion 24a extending integrally from the free piston 24 upward, and inserted for free sliding into the smaller diameter section 23b of the cylinder 23. As shown in FIG. 4 in detail, the piston 25 is provided with a plural number of oil holes 26 and 27 in staggered positions. Sheet-shaped valves 28 and 29 for opening and closing the oil holes 26 and 27 are disposed over and under the piston 25. A cap 30 is fitted to the bottom end of the cylinder 23.

The interior of the cylinder 23 is defined with the free piston 24 into an oil chamber Sa and a gas chamber Sb, with the oil chamber further defined with the piston 25 into an upper oil chamber Sa1 and a lower oil chamber Sa2. The oil chambers Sa1 and Sa2 are filled with oil, and the gas chamber Sb is filled with an inert gas and sealed. As shown in FIG. 1, the upper oil chamber Sa1 is connected through a communication passage 31 and a nipple 32 to the elongate hole-shaped oil chamber S4 of the hydraulic damper 1 on the right hand side. The lower oil chamber Sa2 is connected through a communication passage 33 and a nipple 34 to the elongate hole-shaped oil chamber S4 of the hydraulic damper 1 on the left hand side.

When the vehicle suspension system constituted as described above is employed, the pressure regulator 2 is mounted on the vehicle body side, the piston rods 4 of the hydraulic dampers 1 are mounted on the vehicle body side, and the cylinders 3 are connected to the wheel side. Therefore, a pair of right and left front wheels of a four-wheeled vehicle are suspended on the vehicle body side by means of the suspension system related to this embodiment.

Next, the function of the vehicle suspension system related to this embodiment will be described.

When a four-wheeled vehicle runs on a road and its right and left front wheels move up and down to follow road surface irregularities, the cylinder 3 and the piston rod 4 of each hydraulic damper 1 move to extent or contract. For example, when the right and left front wheels run over a bump on the road surface and the cylinders 3 of the right and left hydraulic dampers 1 move up by the same travel relative to the piston rods 4, the piston rods 4 move down relative to the cylinders 3, and the sub-pistons rods 21 move up relative to the piston rods 4.

As described above, when the piston rod 4 moves down relative to the cylinder 3, the piston 5 attached to the piston rod 4 moves down together within the inner cylinder 3a. As a result, oil in the lower oil chamber S2 in the inner cylinder 3a flows through the oil hole 6 formed in the piston 5, pushes and opens the valve 8, and flows to the upper oil chamber S1. At the same time, the amount of oil corresponding to the volume of part of the piston rod 4 which moves into the inner cylinder 3a flows through the circular hole 17a (See FIG. 3) formed in the valve 17 and through the oil hole 15 bored in the bottom plate 13, pushes and opens the valve 18, flows through the communication hole 16 formed in the bottom plate 13, into the oil chamber S31 of the chamber S3 formed between the inner cylinder 3a and the outer cylinder 3b. As a result, the surface level of the oil in the oil chamber S31 of the chamber S3 rises, and the volume of part of the piston rod 4 that has moved into the inner cylinder 3a is balanced by the compression of gas contained in the gas chamber S32 of the chamber S3.

At the same time, since the sub-piston rod 21 and the piston 22 move up relative to the piston rod 4, oil in the elongate hole-shaped oil chamber S4 flows through the communication passages 31 and 33 to the upper and lower oil chambers Sa1 and Sa2 of the pressure regulator 2. Here, the amount oil sent to the upper and lower oil chambers Sa1 and Sa2 is: the cross-sectional area of the elongate hole-shaped oil passage S4 multiplied by the stroke of the piston 22. Since the cross-sectional area of the elongate hole-shaped oil passage S4 is small, the amount of oil sent to the upper and lower oil chambers Sa1 and Sa2 is smaller than the volume of part of the piston rod 4 that enters the inner cylinder 3a.

When oil is sent to the upper and lower oil chambers Sa1 and Sa2 as described above, the free piston 24 and the piston 25 as a single body move down in the cylinder 23 and compress the gas in the gas chamber Sb. Here, since the cross-sectional areas of the greater diameter section 23a and the smaller diameter section 23b of the cylinder 23 of the pressure regulator 2 are set so that the volumes of the upper and lower oil chambers Sa1 and Sa2 increase or decrease by the same amount, little oil flows through the piston 25 between the oil chambers Sa1 and Sa2, oscillation of the vehicle body is attenuated with the damping forces produced as oil flows through the valves 8 and 18 of respective hydraulic dampers 1. In this way, the ride comfort in the four-wheeled vehicle is improved.

On the other hand for example when the hydraulic damper 1 on the left hand side contracts and the hydraulic damper 1 on the right hand side extends as the vehicle turns right, the volume of part of the piston rod 4 that moves into the cylinder 3 is compensated for by the compression of the gas, and at the same time, oil in the elongate hole-shaped oil chamber S4 is sent through the communication passage 33 to the lower oil chamber Sa2 of the pressure regulator 2.

In contrast to the above, in the hydraulic damper 1 on the right hand side, since the piston rod 4 and the piston 5 move in the opposite upward direction, oil in the upper chamber S1 in the inner cylinder 3a of the cylinder 3 flows through the oil hole 7 in the piston 5 to open the valve 9, and into the lower oil chamber S2. At the same time, an amount of oil corresponding to the volume of part of the piston rod 4 that moves out of the cylinder 3 flows from the oil chamber S31 of the chamber S3 between the inner and outer cylinders 3a and 3b through the communication hole 16 and the oil hole 14 in the bottom plate 13, while pushing and opening the valve 17, into the lower oil chamber S2.

Also at the same time, since the sub-piston rod 21 and the piston 22 move down relative to the piston rod 4, a certain amount of oil is supplied from the upper oil chamber Sa1 of the pressure regulator to the elongate hole-shaped oil chamber S4 in the piston rod 4.

In the pressure regulator 2, since part of the oil entering the lower oil chamber Sa2 flows through the oil hole 26 in the piston 25 to open the valve 28 into the upper oil chamber Sa1, a damping force is produced also with the pressure regulator 2 in addition to the damping forces produced with respective hydraulic dampers 1. As a result, extension and contraction movements of respective hydraulic dampers 1 are restricted, and the rolling of the vehicle body during turning is restricted.

Description is omitted on the functions when the right and left hydraulic dampers 1 extend, and when the left hand side hydraulic damper 1 extends while the right hand side hydraulic damper 1 contracts during a left turn of the vehicle.

With the vehicle suspension system of this embodiment, when the right and left hydraulic dampers 1 extend or contract in the same direction, bouncing oscillation of the vehicle body is attenuated with the damping forces produced with both of the hydraulic dampers 1. When the right and left hydraulic dampers 1 extend or contract in mutually different directions, a damping force is also produced with the pressure regulator 2 in addition to the damping forces produced with both of the hydraulic dampers 1, and rolling of the vehicle body is restricted.

With the vehicle suspension system of this embodiment described above, the increase or decrease in the amount of oil in the inner cylinder 3a caused by the movement of the piston rod 4 of each hydraulic damper 1 into or out of the cylinder 3 is made up for by the compression or expansion of the gas sealed in the gas chamber S32 of the chamber S3 of the hydraulic damper 1 itself. Only the increase or decrease in the amount of oil in the elongate hole-shaped oil chamber S4 cause by the reciprocal movement of the small diameter sub-piston rod 21 toward and away from the elongate hole-shaped oil chamber S4 is absorbed with the pressure regulator 2. In this case, as described above, since the cross-sectional areas of the sub-piston rod 21 and the elongate hole-shaped oil chamber S4 are smaller than that of the piston rod 4, the volume to be made up for with the pressure regulator 2 can be made small even if the diameter of the piston rod 4 is great. As a result, the size and cost of the pressure regulator 2 can be reduced, and a great degree of freedom can be secured in mounting the pressure regulator 2 on the vehicle.

Also with this embodiment of the vehicle suspension system, the hydraulic routes of the hydraulic dampers 1 is constituted to be independent of the hydraulic route including the elongate hole-shaped oil chamber S4 of the hydraulic dampers 1 and the oil chambers Sa (Sa1, Sa2) connected to the elongate hole-shaped oil chamber S4. This makes it possible to use different kinds of oil (for example of different viscosity values) in respective hydraulic routes, so that respective hydraulic routes do not affect each other even if the amount of oil decreases by the lapse of time.

Also with this embodiment of vehicle suspension system, since the piston rod 4 in which the elongate hole-shaped oil chamber S4 is formed is connected to the vehicle body side, the communication passages 31 and 33, interconnecting the elongate hole-shaped oil chamber S4 and the oil chambers Sa1 and Sa2 of the pressure regulator 2 secured on the vehicle body side, are not affected with the oscillation of the wheels and their durability is improved.

Moreover, since a gap is provided between the hollow section 4a of the piston rod 4 and the sub-piston rod 21 of each hydraulic damper 1, the sliding resistance of the sub-piston rod 21 is held low, and no distortion occurs between the two components even if the coaxial accuracy between the sub-piston rod 21 and the piston rod 4 is poor.

Furthermore, with this embodiment of vehicle suspension system, since the end of the sub-piston rod 21 of each hydraulic damper 1 is not secured to the cylinder 3 but made to contact the top surface of the stop member 20, even if the cylinder 3 is deformed by a great lateral force, such a deformation does not affect the sub-piston rod 21, enabling smooth sliding of the piston rod 4 and the sub-piston rod 21.

According to the embodiment described above, a vehicle suspension system comprises; a first and second hydraulic dampers, each provided with a cylinder wherein a piston connected to one end of a piston rod is inserted for free sliding, and a pressure regulator having a first and second oil chambers respectively connected to the first and second hydraulic dampers, in which, the piston rod of each hydraulic damper is made in a hollow shape and a hollow section is formed in the interior of the hollow shape, a sub-piston rod extending from the cylinder side is inserted into the hollow section, another piston formed on the sub-piston rod is inserted for free sliding into the hollow section of the piston rod to define an elongate hole-shaped oil chamber in the hollow section, the elongate hole-shaped oil chamber of one of the hydraulic dampers is connected to the first oil chamber of the pressure regulator, the elongate hole-shaped oil chamber of the other hydraulic damper is connected to the second oil chamber of the pressure regulator, and the hydraulic route of each hydraulic damper is provided with volume absorption means.

As a result, effects are provided that the pressure regulator may be made in a smaller size and at a lower cost even if the diameter of the piston rod of each hydraulic damper is great and that a greater degree of freedom is secured for mounting the pressure regulator on the vehicle.

Furthermore, the increase or decrease in the oil amount in the cylinder caused by the movement of the piston rod of each hydraulic damper toward or away from the cylinder is balanced by the compression or expansion of gas in the gas chamber formed in the hydraulic damper itself, and only the increase or decrease in the oil amount in the elongate hole-shaped oil chamber caused by the reciprocal movement of the small diameter sub-piston rod into and out of the elongate hole-shaped oil chamber is balanced with the pressure regulator. In this case, since the cross-sectional area of the sub-piston rod and the elongate hole-shaped oil chamber are smaller than that of the piston rod, the volume to be balanced with the pressure regulator may be made small even if the diameter of the piston rod is great. This makes it possible to reduce the size and cost of the pressure regulator, and to secure a great degree of freedom in mounting the pressure regulator on the vehicle.

The hydraulic route of each hydraulic damper is constituted independent of the hydraulic route including the elongate hole-shaped oil chamber of each hydraulic damper and the oil chamber of the pressure regulator connected to the elongate hole-shaped oil chamber.

Since the hydraulic route of each hydraulic damper is made independent of the hydraulic route including the elongate hole-shaped oil chamber of each hydraulic damper and the oil chamber of the pressure regulator connected to the elongate hole-shaped oil chamber, different types of oil may be used in different hydraulic routes, and the hydraulic routes do not affect each other even if the amount of oil decreases as the lapse of time.

The piston rod of each hydraulic damper is connected to the vehicle body side and the cylinder is connected to the wheel side.

Since the piston rod in which the elongate hole-shaped oil chamber is formed is connected to the vehicle body side and the cylinder is connected to the wheel side, the communication passage between the elongate hole-shaped oil chamber and the oil chamber of the pressure regulator is not affected with the wheel movement, resulting in longer durability of the communication passage.

A gap is formed between the hollow section of the piston rod and the sub-piston rod of each hydraulic damper.

Since a gap is provided between the hollow section of the piston rod and the sub-piston rod of each hydraulic damper, sliding resistance of the sub-piston rod is held low. Another advantage of this feature is that the sub-piston rod and the piston rod are not distorted even if their coaxial accuracy is poor.

The end of the sub-piston rod of each hydraulic damper is made to contact the cylinder.

Since the end of the sub-piston rod of each hydraulic damper is made to contact the cylinder without fixing it to the cylinder, the sub-piston rod is not affected with the cylinder even if the cylinder is deformed by a great lateral force, and smooth sliding is brought about between the piston rod and the sub-piston rod.

According to the embodiment said vehicle suspension device comprises first and second hydraulic dampers 1, each having a cylinder 3 and a first piston 5 defining a first and a second hydraulic chamber S1, S2 within said cylinder 3. Said cylinder 3 and said first piston 5 are relatively moveable to each other.

A pressure regulator 2 having first and second hydraulic chambers Sa1, Sa2 is respectively connected to the first and second hydraulic dampers 1, wherein a sub-piston 22 is provided in each of the first and second hydraulic dampers 1. Said sub-piston 22 is inserted in a third hydraulic chamber S4 and relatively moveable within said third hydraulic chamber S4 in accordance with the relative movement between said cylinder 3 and said first piston 5. Said third hydraulic chambers S4 of said first and second hydraulic dampers 1 are connected to the first and second oil chambers Sa1, Sa2 of the pressure regulator 2, respectively.

Said first piston 5 is connected to one end of a piston rod 4. Said piston rod 4 of each hydraulic damper 1 is made in a hollow shape and a hollow section 4a is formed in the interior of the hollow shape. Said sub-piston 22 is connected with a sub-piston rod 21 extending from the cylinder 3 and inserted into the hollow section 4a. Said sub-piston 22 is inserted for free sliding into the hollow section 4a of the piston rod 4 to define an elongate hole-shaped oil chamber serving as said third hydraulic chamber S4.

An end of the sub-piston rod 21 of each hydraulic damper 1 is made to contact the cylinder 3. A gap is formed between the hollow section 4a of the piston rod 4 and the sub-piston rod 21 of each hydraulic damper 1. Each hydraulic damper 1 is provided with volume absorption means S32.

A hydraulic route including the first and a second hydraulic chamber S1,S2 of each hydraulic damper 1 is constituted independent of a hydraulic route including the third hydraulic chamber S4 of each hydraulic damper 1. The first and second hydraulic chamber Sa1,Sa2 of the pressure regulator 2 respectively connected to the third hydraulic chamber S4.

The first piston 5 of each hydraulic damper 1 is connected to a body side of a vehicle and the cylinder 3 is connected to a wheel side of the vehicle.

The above mentioned embodiment provides a vehicle suspension system or device that makes it possible to reduce size and cost of a pressure regulator and to secure large degree of freedom of mounting the pressure regulator on a vehicle even if the piston diameter of each hydraulic damper is great.

Such a vehicle suspension system comprises a first and second hydraulic dampers 1, each provided with a cylinder 3 wherein a piston 5 connected to one end of a piston rod 4 is inserted for free sliding, and a pressure regulator 2 having a first and second oil chambers Sa1 and Sa2 respectively connected to the first and second hydraulic dampers 1, the piston rod 4 of each hydraulic damper 1 is made in a hollow shape and a hollow section is formed in the interior of the hollow shape, a sub-piston rod 21 extending from the cylinder 3 side is inserted into the hollow section, another piston 22 formed on the sub-piston rod 21 is inserted for free sliding into the hollow section of the piston rod 4 to define an elongate hole-shaped oil chamber S4 in the hollow section, the elongate hole-shaped oil chamber S4 of one of the hydraulic dampers 1 is connected to the first oil chamber Sa1 of the pressure regulator 2, the elongate hole-shaped oil chamber S4 of the other hydraulic damper 1 is connected to the second oil chamber Sa2 of the pressure regulator 2, and hydraulic route (chamber S3) of each hydraulic damper 1 is provided with a gas chamber (volume balancing means) S32.

The embodiment teaches a vehicle suspension device comprising: first and second hydraulic dampers 1, a pressure regulator 2 connected to the first and second hydraulic dampers 1, wherein a sub-piston 22 is provided in each of the first and second hydraulic dampers 1, said sub-piston 22 is inserted in a hydraulic chamber S4 and relatively moveable within said hydraulic chamber S4 in accordance with the relative movement between a cylinder 3 and said piston 5 of each damper 1, and wherein said hydraulic chambers S4 are connected to the pressure regulator 2.

## Claims

1. A vehicle suspension device comprising:
first and second hydraulic dampers (1), each having a cylinder (3) and a first piston (5) defining a first and a second hydraulic chamber (S1, S2) within said cylinder (3), said cylinder (3) and said first piston (5) are relatively moveable to each other; and
a pressure regulator (2) having first and second hydraulic chambers (Sa1, Sa2) respectively connected to the first and second hydraulic dampers (1), **characterized in that** a sub-piston (22) is provided in each of the first and second hydraulic dampers (1), said sub-piston (22) is inserted in a third hydraulic chamber (S4) and relatively moveable within said third hydraulic chamber (S4) in accordance with the relative movement between said cylinder (3) and said first piston (5), and wherein said third hydraulic chambers (S4) of said first and second hydraulic dampers (1) are connected to the first and second oil chambers (Sa1, Sa2) of the pressure regulator (2), respectively.

2. A vehicle suspension device according to claim 1 **characterized in that**, said first piston (5) is connected to one end of a piston rod (4), said piston rod (4) of each hydraulic damper (1) is made in a hollow shape and a hollow section (4a) is formed in the interior of the hollow shape, and said sub-piston (22) is connected with a sub-piston rod (21) extending from the cylinder (3) and inserted into the hollow section (4a), wherein said sub-piston (22) is inserted for free sliding into the hollow section (4a) of the piston rod (4) to define an elongate hole-shaped oil chamber serving as said third hydraulic chamber (S4).

3. A vehicle suspension device according to claim 2 **characterized in that** an end of the sub-piston rod (21) of each hydraulic damper (1) is made to contact the cylinder (3).

4. A vehicle suspension device according to claim 2 or 3, **characterized in that** a gap is formed between the hollow section (4a) of the piston rod (4) and the sub-piston rod (21) of each hydraulic damper (1).

5. A vehicle suspension device according to at least one of the claims 1 to 4 **characterized in that,** each hydraulic damper (1) is provided with volume absorption means (S32).

6. A vehicle suspension device according to at least one of the claim 1 to 5, **characterized in that** a hydraulic route including the first and a second hydraulic chamber (S1,S2) of each hydraulic damper (1) is constituted independent of a hydraulic route including the third hydraulic chamber (S4) of each hydraulic damper (1) and the first and second hydraulic chamber (Sa1,Sa2) of the pressure regulator (2) respectively connected to the third hydraulic chamber (S4).

7. A vehicle suspension device according to at least one of the claims 1 to 6, **characterized in that** the first piston (5) of each hydraulic damper (1) is connected to a body side of a vehicle and the cylinder (3) is connected to a wheel side of the vehicle.

## Patentansprüche

1. Fahrzeugaufhängungsvorrichtung mit:
ersten und zweiten hydraulischen Dämpfern (1), die jeweils einen Zylinder (3) und einen ersten Kolben (5) haben, die eine erste und zweite Hydraulikkammer (S1, S2) innerhalb des Zylinders (3) bilden, wobei der Zylinder (3) und der erste Kolben (5) im Verhältnis zueinander bewegbar sind; und
einem Druckregler (2), der erste und zweite Hydraulikkammem (Sa1, Sa2) hat, jeweils mit der ersten und zweiten hydraulischen Dämpfem (1) verbunden **dadurch gekennzeichnet, dass** ein Sub- Kolben (22) in jedem der ersten und zweiten hydraulischen Dämpfern (1) vorgesehen ist, der Sub- Kolben (22) in eine dritte Hydraulikkammer (S4) eingesetzt ist und innerhalb der dritten Hydraulikkammer (S4) in Übereinstimmung mit der Relativbewegung zwischen dem Zylinder (3) und dem ersten Kolben (5) bewegbar ist, und wobei die dritten Hydraulikkammem (S4) des ersten und zweiten hydraulischen Dämpfers (1) jeweils mit den ersten und zweiten Ölkammem (Sa1, Sa2) des Druckreglers (2) verbunden sind.

2. Fahrzeugaufhängungsvorrichtung nach Anspruch 1, **dadurch gekennzeichnet, dass** der erste Kolben (5) mit einem Ende einer Kolbenstange (4) verbunden ist, wobei die Kolbenstange (4) jedes hydraulischen Dämpfers (1) in einer hohlen Form hergestellt ist und ein hohler Abschnitt (4a) in dem Inneren der hohlen Form gebildet ist und der Sub- Kolben (22) mit einer Sub- Kolbenstange (21) verbunden ist, die sich von dem Zylinder (3) erstreckt und in den hohlen Abschnitt (4a) eingesetzt ist, wobei der Sub- Kolben (22) zum freien Gleiten in den hohlen Abschnitt (4a) der Kolbenstange (4) eingesetzt ist, um eine langgestreckte, bohrungsförmige Ölkammer zu bilden, die als die dritte Hydraulikkammer (S4) dient.

3. Fahrzeugaufhängungsvorrichtung nach Anspruch 2, **dadurch gekennzeichnet, dass** ein Ende der Sub- Kolbenstange (21) jedes hydraulischen Dämpfers (1) veranlasst ist, den Zylinder (3) zu berühren.

4. Fahrzeugaufhängungsvorrichtung nach Anspruch 2 oder 3, **dadurch gekennzeichnet, dass** ein Spalt zwischen dem hohlen Abschnitt (4a) der Kolbenstange (4) und der Sub- Kolbenstange (21) jedes hydraulischen Dämpfers (1) gebildet ist.

5. Fahrzeugaufhängungsvorrichtung nach zumindest einem der Ansprüche 1 bis 4, **dadurch gekennzeichnet, dass** jeder hydraulische Dämpfer (1) mit einer Volumenabsorptionseinrichtung (S32) versehen ist.

6. Fahrzeugaufhängungsvorrichtung nach zumindest einem der Ansprüche 1 bis 5, **dadurch gekennzeichnet, dass** ein Hydraulikpfad, der die erste und eine zweite Hydraulikkammer (S1, S2) jedes hydraulischen Dämpfers (1) enthält, unabhängig von einem Hydraulikpfad, der die dritte Hydraulikkammer (S4) jedes hydraulischen Dämpfers (1) enthält, gebildet ist, und wobei die erste und die zweite Hydraulikkammer (Sa1, Sa2) des Druckreglers (2) jeweils mit der dritten Hydraulikkammer (S4) verbunden ist.

7. Fahrzeugaufhängungsvorrichtung nach zumindest einem der Ansprüche 1 bis 6, **dadurch gekennzeichnet, dass** der erste Kolben (5) jedes hydraulischen Dämpfers (1) mit einer Karosserieseite eines Fahrzeuges verbunden ist und der Zylinder (3) mit einer Radseite des Fahrzeuges verbunden ist.

## Revendications

1. Dispositif de suspension pour véhicule comprenant :
un premier et un second amortisseurs hydrauliques (1), chacun comprenant un cylindre (3) et un premier piston (5) définissant une première et une seconde chambres hydrauliques (S1, S2) à l'intérieur dudit cylindre (3), ledit cylindre (3) et ledit premier piston (5) sont mobiles l'un par rapport à l'autre ; et
un régulateur de, pression (2) comprenant une première et une seconde chambres hydrauliques (Sa1, Sa2) connectées respectivement aux premier et second amortisseurs hydrauliques (1),
**caractérisé en ce qu'**un piston intermédiaire (22) est aménagé dans chacun des premier et second amortisseurs hydrauliques (1), ledit piston intermédiaire (22) est introduit dans une troisième chambre hydraulique (S4) et est relativement mobile à l'intérieur de ladite troisième chambre hydraulique (S4) en fonction du déplacement relatif entre ledit cylindre (3) et ledit premier piston (5), et dans lequel lesdites troisièmes chambres hydrauliques (S4) desdits premier et second amortisseurs hydrauliques (1) sont respectivement connectées aux première et seconde chambres à huile (Sa1, Sa2) du régulateur de pression (2).

2. Dispositif de suspension pour véhicule selon la revendication 1, **caractérisé en ce que** ledit premier piston (5) est connecté à une extrémité d'une tige de piston (4), ladite tige de piston (4) de chaque amortisseur hydraulique (1) a une forme creuse, et une section creuse (4a) est formée à l'intérieur de la forme creuse, et ledit piston intermédiaire (22) est connecté à une tige de piston intermédiaire (21) qui s'étend à partir du cylindre (3) et qui est introduite à l'intérieur de la section creuse (4a), dans laquelle ledit piston intermédiaire (22) est introduit de manière à coulisser librement à l'intérieur de la section creuse (4a) de la tige de piston (4) afin de définir une chambre à huile en forme d'orifice allongé dont la fonction est de former ladite troisième chambre hydraulique (S4).

3. Dispositif de suspension pour véhicule selon la revendication 2, **caractérisé en ce qu'**une extrémité de tige de piston intermédiaire (21) de chaque amortisseur hydraulique (1) est conçue de manière à être en contact avec le cylindre (3).

4. Dispositif de suspension pour véhicule selon les revendications 2 ou 3, **caractérisé en ce qu'**un espace est formé entre la section creuse (4a) de la tige de piston (4) et la tige de piston intermédiaire (21) de chaque amortisseur hydraulique (1).

5. Dispositif de suspension pour véhicule selon au moins l'une des revendications 1 à 4, **caractérisé en ce que**. chaque amortisseur hydraulique (1) comprend des moyens d'absorption de volume (S32).

6. Dispositif de suspension pour véhicule selon au moins l'une des revendications 1 à 5, **caractérisé en ce qu'**un itinéraire hydraulique comprenant la première et la seconde chambres hydrauliques (S1, S2) de chaque amortisseur hydraulique (1) est constitué de manière indépendante d'un itinéraire hydraulique comprenant la troisième chambre hydraulique (S4) de chaque amortisseur hydraulique (1) et des première et seconde chambres hydrauliques (Sa1, Sa2) du régulateur de pression (2), respectivement connectées à la troisième chambre hydraulique (S4).

7. Dispositif de suspension pour véhicule selon au moins l'une des revendications 1 à 6, **caractérisé en ce que** le premier piston (5) de chaque amortisseur hydraulique (1) est connecté à un côté de corps de véhicule et que le cylindre (3) est connecté à un côté de roue du véhicule.
